# FASCICULE DE BREVET EUROPEEN

(11) **EP 2 155 474 B1**
(45) Date de publication et mention de la délivrance du brevet: **12.01.2011**
(21) Numéro de dépôt: 08774105.4
(22) Date de dépôt: 17.06.2008
(51) Int. Cl.: B29C 70/48, C08J 5/04, C08J 5/06, C08J 5/08

(54) **ARTICLE POLYAMIDE COMPOSITE**
POLYAMID-VERBUNDARTIKEL
COMPOSITE POLYAMIDE ARTICLE

(30) Priorité: 20.06.2007 FR 0704388
(43) Date de publication de la demande: 24.02.2010
(73) Titulaire: Rhodia Opérations, 93306 Aubervilliers (FR)
(72) Inventeur: ORANGE, Gilles, F-95230 Soisy Sous Montmorency (FR); BOURDON, Richard, F-38780 Eyzin Pinet (FR); DURAND, Roland, F-69720 Saint Bonnet De Mure (FR)
(74) Mandataire: Valentino, Cédric
(86) Numéro de dépôt international: PCT/EP2008/057587
(87) Numéro de publication internationale: WO 2008/155318

(56) Documents cités:
- WO-A-97/24388
- WO-A-03/014198
- WO-A-03/029350
- FR-A- 2 743 077
- FR-A- 2 852 322

## Description

La présente invention concerne l'utilisation de polyamide de haute fluidité servant à l'imprégnation de matériaux de renfort prenant la forme d'étoffe de tissus industriels pour la fabrication de matériaux composites. Le domaine de l'invention est celui des matériaux composites et de leurs procédés de fabrication.

### ART ANTERIEUR

Dans le domaine des matériaux hautes-performances, les composites ont pris une place prépondérante, de par leurs performances et les gains de poids qu'ils autorisent. Les composites hautes performances les plus connus à ce jour, sont obtenus à partir de résines thermodurcissables, dont l'utilisation est limitée aux applications de faibles à moyennes séries, principalement dans l'aéronautique, le sport automobile, et dans les meilleurs cas, présentant des temps de fabrication voisins d'une quinzaine de minutes, comme par exemple, lors de la fabrication de skis. Le coût de ces matériaux, et/ou les temps de fabrication, les rendent difficilement compatibles avec un usage en grande série. De plus, l'utilisation de résines thermodurcissables implique souvent la présence de solvants et de monomères. Enfin, ces composites sont difficilement recyclables.

Une réponse, en regard des temps de fabrication, est donnée par les composites à matrice thermoplastique. Les polymères thermoplastiques sont en général connus pour leur viscosité élevée, ce qui constitue un frein en ce qui concerne l'imprégnation des matériaux de renfort, composés en général de faisceaux multifilamentaires très denses. Il résulte de l'emploi des matrices thermoplastiques disponibles sur le marché, une difficulté d'imprégnation nécessitant soit des temps d'imprégnation prolongés, soit des pressions de mise en oeuvre importantes. Dans la majeure partie des cas, les matériaux composites obtenus à partir de ces matrices peuvent présenter des microvides et des zones non imprégnées. Ces microvides causent des chutes de propriétés mécaniques, un vieillissement prématuré du matériau ainsi que des problèmes de délaminage lorsque le matériau se compose de plusieurs couches de renforts. Ce phénomène de perte de propriétés mécaniques est par ailleurs accentué lorsque les temps de cycle pour la fabrication des articles composites diminuent.

L'objectif de la présente invention est donc de remédier à ces inconvénients en proposant un article composite qui puisse être fabriqué avec des temps de cycle courts tout en ayant de bonnes propriétés d'usage, telles que de bonnes propriétés mécaniques.

### INVENTION

La demanderesse a découvert de manière inattendue que l'utilisation de polyamides de haute fluidité pour la fabrication d'articles composites permettaient l'obtention d'article présentant de bonnes propriétés mécaniques, telles que notamment la rigidité, la résistance à la rupture, la résistance aux chocs, et le comportement en fatigue, même lorsqu'ils sont fabriqués avec des temps de cycle plus courts que ceux habituellement utilisés, et sans aucun autre traitement. Ceci permet de fournir un matériau composite présentant un avantage de réduction de coûts de fabrication, par l'emploi d'un outillage mettant en oeuvre des temps de cycles raccourcis.

Les articles selon l'invention présentent notamment les avantages de rigidité, légèreté, et recyclabilité, et un bon aspect de surface.

L'invention a pour premier objet un procédé de fabrication d'un article composite comprenant au moins :
a) une étape d'imprégnation d'une étoffe de renfort avec une composition polyamide à l'état fondu, présentant une viscosité fondue η comprise entre 1 et 50 Pa.s, ladite étoffe de renfort étant maintenue à une température de plus ou moins 50°C par rapport à la température de fusion dudit polyamide ; et
b) une étape de refroidissement et ensuite de récupération de l'article composite.

Plus précisément, l'invention concerne un procédé de fabrication d'un article composite comprenant au moins :
a) une étape d'imprégnation d'une étoffe de renfort avec une composition polyamide à l'état fondu, présentant une viscosité fondue η comprise entre 1 et 50 Pa.s, le polyamide présentant une masse moléculaire Mn supérieure à 8000 ; ladite-étoffe de renfort étant maintenue à une température de plus ou moins 50°C par rapport à la température de fusion dudit polyamide ;
   l'imprégnation de l'étoffe par la composition polyamide est réalisée soit :
   - par injection de la composition polyamide à l'état fondu sur l'étoffe ; ou
   - par mise en présence de l'étoffe avec la composition polyamide sous forme de poudre ou de film, puis mise en fusion de ladite composition polyamide ; et
b) une étape de -refroidissement et ensuite de récupération de l'article composite.

On entend par étoffe, une surface textile obtenue par assemblage de fils ou de fibres solidarisés par un procédé quelconque, tel que notamment collage, feutrage, tressage, tissage, tricotage. Ces étoffes sont aussi désignés comme des réseaux fibreux ou filamenteux. Par fil, on entend un monofilament, un fil multifilamentaire continu, un filé de fibres, obtenu à partir d'un unique type de fibres ou de plusieurs types de fibres en mélange intime. Le fil continu peut être également obtenu par assemblage de plusieurs fils multifilamentaires. Par fibre, on entend un filament ou un ensemble de filaments coupés, craqués ou convertis.

Les fils et/ou fibres de renfort selon l'invention sont préférentiellement choisis parmi les fils et/ou les fibres de carbone, de verre, d'aramides, de polyimides, de lin, de chanvre, de sisal, de coir, de jute, de kenaf et/ou de leur mélange. Plus préférentiellement, les étoffes de renfort sont uniquement constituées de fils et/ou fibres de renfort choisis parmi les fils et/ou les fibres de carbone, de verre, d'aramides, de polyimides, de lin, de chanvre, de sisal, de coir, de jute, de kenaf et/ou de leur mélange.

Ces étoffes on préférentiellement un grammage, c'est-à-dire le poids au mètre carré, compris entre 100 et 1000 g/m².

Leur structure peut être aléatoire, unidirectionelle (1D), ou multidirectionelle (2D, 2,5D, 3D ou autre).

Le polyamide selon l'invention présente une viscosité fondue η comprise entre 1 et 50 Pa.s. Cette viscosité peut être mesurée à l'aide d'un rhéomètre plan-plan de diamètre 50 mm, sous un balayage en cisaillement par pallier allant de 1 à 160 s-1. Le polymère est sous forme de film d'une épaisseur 150 µm, ou bien de granulés. Le polymère est amené à une température de 25 à 30°C au dessus de son point de fusion, et la mesure est alors effectuée.

La masse moléculaire (Mn) des polyamides est préférentiellement supérieure à 8000, plus préférentiellement compris entre 8000 et 20000 , ayant des propriétés mécaniques suffisantes et une certaine tenue lors des différents procédés de mises en forme.

Les polyamides semi-cristallins sont particulièrement préférés.

Les polyamides peuvent être choisis dans le groupe comprenant les polyamides obtenus par polycondensation d'au moins un diacide carboxylique aliphatique linéaire avec une diamine aliphatique ou cyclique ou entre au moins un diacide carboxylique aromatique et une diamine aliphatique ou aromatique, les polyamides obtenus par polycondensation d'au moins un aminoacide ou lactame sur lui-même, ou leur mélange et (co)polyamides.

Le polyamide de l'invention est notamment choisi dans le groupe comprenant les polyamides obtenus par polycondensation d'au moins un diacide carboxylique aliphatique avec une diamine aliphatique ou cyclique comme le PA 6.6, PA 6.10, PA 6.12, PA 12.12, PA 4.6, MXD 6 ou entre au moins un diacide carboxylique aromatique et une diamine aliphatique ou aromatique comme les polytéréphtalamides, polyisophtalamides, polyaramides, ou leur mélange et (co)polyamides. Le polyamide de l'invention peut aussi être choisi dans les polyamides obtenus par polycondensation d'au moins un aminoacide ou lactame sur lui-même, l'amino-acide pouvant être généré par l'ouverture hydrolytique d'un cycle lactame tels que, par exemple PA 6, PA 7, PA 11, PA 12, ou leur mélange et (co)polyamides.

Des polyamides de haute fluidité peuvent notamment être obtenus en contrôlant leur poids moléculaire lors de leur synthèse, notamment par l'addition avant ou pendant la polymérisation des monomères de polyamide, de monomères modifiant la longueur des chaînes, tel que notamment des diamines, diacides carboxyliques, monoamines et/ou monoacides carboxyliques. Il est également possible d'ajouter à la polymérisation des composés multifonctionnels.

Des polyamides selon l'invention peuvent aussi être obtenus par mélange, notamment en fondu, de polyamides avec des monomères modifiant la longueur des chaînes, tel que notamment des diamines, diacides carboxyliques, monoamines et/ou monoacides carboxyliques.

La composition de l'invention peut également comprendre les copolyamides dérivés notamment des polyamides ci-dessus, ou les mélanges de ces polyamides ou (co)polyamides.

On peut également utiliser comme polyamide de haute fluidité un polyamide étoile comprenant des chaînes macromoléculaires étoiles et le cas échéant des chaînes macromoléculaires linéaires.

Le polyamide à structure étoile est un polymère comprenant des chaînes macromoléculaires étoiles, et éventuellement des chaînes macromoléculaires linéaires. Les polymères comprenant de telles chaînes macromoléculaires étoiles sont par exemple décrits dans les documents FR2743077, FR2779730, EP0682057 et EP0832149. Ces composés sont connus pour présenter une fluidité améliorée par rapport à des polyamides linéaires.

Les chaînes macromoléculaires étoiles comportent un coeur et au moins trois branches de polyamide. Les branches sont liées au coeur par une liaison covalente, par l'intermédiaire d'un groupement amide ou d'un groupement d'une autre nature. Le coeur est un composé chimique organique ou organométallique, de préférence un composé hydrocarboné comportant éventuellement des hétéroatomes et auquel sont reliées les branches. Les branches sont des chaînes polyamides. Les chaînes polyamides constituant les branches sont de préférence du type de celles obtenues par polymérisation des lactames ou aminoacides, par exemple de type polyamide 6.

Le polyamide à structure étoile selon l'invention comprend éventuellement, outre les chaînes étoiles, des chaînes polyamide linéaires. Dans ce cas, le rapport en poids entre la quantité de chaînes étoiles et la somme des quantités de chaînes étoiles et de chaînes linéaires est compris entre 0,5 et 1 bornes incluses. Il est de préférence compris entre 0,6 et 0,9.

Selon un mode de réalisation préférentiel de l'invention, le polyamide à structure étoile, c'est-à-dire comprenant des chaînes macromoléculaires étoiles, est obtenu par copolymérisation d'un mélange de monomères comprenant au moins :
a) des monomères de formule générale (I) suivante : 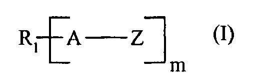
b) des monomères de formules générales (IIa) et (IIb) suivantes :

   X-R₂-Y (IIa)

   ou 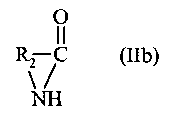
c) éventuellement des monomères de formule générale (III) suivante :

   Z-R₃-Z (III)

   dans lesquelles :
   - R1 est un radical hydrocarboné comprenant au moins 2 atomes de carbone, linéaire ou cyclique, aromatique ou aliphatique et pouvant comprendre des hétéroatomes,
   - A est une liaison-covalente ou un radical hydrocarboné aliphatique pouvant comprendre des hétéroatomes et comprenant de 1 à 20 atomes de carbone,
   - Z représente une fonction amine primaire ou une fonction acide carboxylique,
   - Y est une fonction amine primaire quand X représente une fonction acide carboxylique, ou Y est une fonction acide carboxylique quand X représente une fonction amine primaire,
   - R2, R3 identiques ou différents représentent des radicaux hydrocarbonés aliphatiques, cycloaliphatiques ou aromatiques substitués ou non comprenant de 2 à 20 atomes de carbone et pouvant comprendre des hétéroatomes,
   - m représente un nombre entier compris entre 3 et 8.

Par acide carboxylique, on entend les acides carboxyliques et leurs dérivés, tels que les anhydrides d'acide, les chlorures d'acide, ou les esters.

Des procédés d'obtention de ces polyamides étoiles sont décrits dans les documents FR2743077 et FR2779730. Ces procédés conduisent à la formation de chaînes macromoléculaires étoiles, en mélange avec éventuellement des chaînes macromoléculaires linéaires.

Si on utilise un comonomère de formule (III), la réaction de polymérisation est avantageusement effectuée jusqu'à l'atteinte de l'équilibre thermodynamique.

Le monomère de formule (I) peut également être mélangé à un polymère en fondu, au cours d'une opération d'extrusion.

Ainsi, selon un autre mode de réalisation de l'invention, le polyamide à structure étoile est obtenu par mélange en fondu, par exemple à l'aide d'un dispositif d'extrusion, d'un polyamide du type de ceux obtenus par polymérisation des lactames et/ou des aminoacides et d'un monomère de formule (I). De tels procédés d'obtention sont décrits dans les brevets EP0682070 et EP0672703.

Selon une caractéristique particulière de l'invention, le radical R₁ est soit un radical cycloaliphatique tel que le radical tétravalent de cyclohexanonyle, soit un radical 1,1,1-triyle-propane, 1,2,3-triyle-propane. Comme autre radicaux R1 convenables pour l'invention on peut citer à titre d'exemple, les radicaux trivalents de phényle et cyclohexanyle substitués ou non, les radicaux tétravalents de diaminopolyméthylène avec un nombre de groupes - méthylène compris avantageusement entre 2 et 12 tels que le radical provenant de l'EDTA (acide éthylène diamino tétracétique), les radicaux octovalents de cyclohexanonyle ou cyclohexadinonyle, et les radicaux provenant de composés issus de la réaction des polyols tels que glycol, pentaérythritol, sorbitol ou mannitol avec l'acrylonitrile.

Avantageusement, au moins deux radicaux R₂ différents peuvent être employés dans les monomères de formule (II).

Le radical A est, de préférence, un radical méthylénique ou polyméthylénique tel que les radicaux éthyle, propyle ou butyle ou un radical polyoxyalkylènique tel que le radical polyoxyéthylènique.

Selon un mode de réalisation particulier de l'invention, le nombre m est supérieur ou égal à 3 et avantageusement égal à 3 ou 4.

La fonction réactive du composé multifonctionnel représentée par le symbole Z est une fonction capable de former une fonction amide.

De préférence, le composé de formule (I) sont choisis parmi la 2,2,6,6-tétra-(β-carboxyéthyl)-cyclohexanone, l'acide trimésique, la 2,4,6-tri-(acide aminocaproique)-1,3,5-triazine et la 4-aminoéthyle-1,8-octanediamine.

Le mélange de monomères à l'origine des chaînes macromoléculaires étoiles peut comporter d'autres composés, tels que des limiteurs de chaînes, des catalyseurs, des additifs, tels que des stabilisants lumière, des stabilisants thermiques.

L'étape d'imprégnation du polyamide de haute fluidité et de l'étoffe de renfort peut être réalisée de diverses manières, selon divers procédés possibles. Il est parfaitement possible de procéder à l'imprégnation d'une ou plusieurs étoffe de renfort.

On peut par exemple injecter la composition polyamide en fondu dans une chambre de moulage comprenant au moins une ou plusieurs étoffes de renfort. L'intérieur de la chambre de moulage est à une température de plus ou moins 50°C par rapport à la température de fusion dudit polyamide. On peut procéder ensuite au refroidissement de la chambre de moulage et de l'article obtenu, pour enfin récupérer ledit article. Ce procédé est connu également sous le nom de procédé de moulage par transfert de résine (RTM) en procédé thermodure, qui consiste à injecter de la résine dans un moule fermé dans lequel ont été préalablement placées des fibres de renforcement. Ce procédé peut être réalisé sous pression.

On peut également réaliser un article composite selon l'invention par un procédé de « film stacking » qui consiste en une compression en température d'un empilement d'étoffes de renfort et de films de polyamide. On procède notamment à la mise en contact d'une ou plusieurs étoffes de renfort et un ou plusieurs films de polyamide de haute fluidité et imprégnation des étoffes par fusion du polyamide. Les pressions nécessaires pour un bon assemblage, sont généralement supérieures à 30 bars.

L'article composite selon l'invention peut aussi être réalisé par mise en contact d'une ou plusieurs étoffes de renfort avec de la poudre d'un polyamide tel que défini précédemment, notamment de la poudre fine, et l'on réalise ladite imprégnation par fusion du polyamide, à une température égale ou supérieure à celle du point de fusion du polyamide, éventuellement sous pression.

Après l'imprégnation de l'étoffe de renfort par le polyamide, l'article est obtenu par solidification de la matrice. Le refroidissement peut avantageusement être effectué rapidement de façon à éviter une cristallisation importante du polyamide, notamment pour maintenir les propriétés de l'article. Le refroidissement peut notamment être effectué en moins de 5 minutes, plus préférentiellement en moins d'une minute. Le moule peut par exemple être refroidit par un circuit de fluide froid. On peut aussi éventuellement transférer l'article composite dans un moule froid, éventuellement sous pression.

La composition polyamide et/ou l'article composite selon l'invention peuvent également comprendre tous les additifs habituellement utilisés dans les compositions à base de polyamide utilisées pour la fabrication d'articles. Ainsi, on peut citer à titre d'exemple d'additifs les stabilisants thermiques, stabilisants UV, antioxydants, lubrifiants, les pigments, colorants, plastifiants, charges de renfort, et agents modifiant la résistance aux chocs.

Des additifs pour améliorer la qualité des interfaces étoffes de renfort polyamide peuvent également être utilisés. Ces additifs peuvent être par exemple incorporés à la composition polyamide, incorporés dans les fils et/ou fibres de l'étoffe de renfort, présents sur les fils et/ou fibres de ladite étoffe, ou encore déposés sur l'étoffe de renfort. Ces additifs peuvent être des agents de couplage tels que ceux de type aminosilanes ou chlorosilanes, ou encore des agents fluidifiants ou mouillants, ou leur association.

Des charges renforçantes peuvent être incorporées à la composition polyamide. Ces charges peuvent être choisies parmi les charges fibreuses, tels que des fibres de verre courtes par exemple, ou des charges non fibreuses tels que le kaolin, le talc, la silice, le mica ou la wollastonite. Leur taille est généralement comprise entre 1 et 50 µm. Des charges sub-microniques voire nanométriques peuvent également être utilisées, seules ou en complément des autres charges.

La présente invention concerne un article susceptible d'être obtenu par le procédé de l'invention. L'article peut notamment être un article composite à base de polyamide comprenant une étoffe de renfort, dans lequel le polyamide présente une viscosité fondue η comprise entre 1 et 50 Pa.s.

Les articles selon l'invention comprennent préférentiellement entre 25 et 65 % en volume d'étoffe de renfort par rapport au poids total.

Les articles composites présentent préférentiellement pour un taux de renfort de 50 % en volume d'une contrainte à la rupture supérieure à 480 MPa et un module élastique supérieur à 25 GPa (pour un taux de vide compris typiquement entre 0 et 5%).

Les articles de l'invention peuvent être des articles finis ou semi-finis, pouvant aussi être appelé pré-imprégnés. On peut par exemple procéder au thermoformage des articles composites sous forme de plaques pour leur donner une forme définie après refroidissement. L'invention concerne ainsi des articles composites ou préformes susceptibles d'être obtenus par le procédé selon la présente invention.

Les articles de l'invention peuvent aussi être des structures de type sandwich présentant une âme insérée entre deux peaux. Les composites de l'invention peuvent être utilisés pour former les couches externes, en les associant à une âme type nid d'abeille ou type mousse. Les couches peuvent être assemblées par collage chimique ou thermique.

Les structures composites selon l'invention peuvent être employées dans de nombreux domaines tels que l'aéronautique, l'automobile, l'industrie électrique, l'industrie des sports et loisirs. Ces structures peuvent être utilisées pour réaliser des articles de sports tels que des skis ou bien pour réaliser des surfaces diverses telles que des planchers spéciaux, des cloisons, des carrosseries de véhicules, ou des panneaux publicitaires. Dans l'aéronautique ces structures sont utilisées notamment au niveau des carénages (fuselage, aile, empennage). Dans l'automobile, elles sont utilisées par exemple au niveau des planchers ou des supports tels que les tablettes arrières.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

Différents polyamides ont été utilisés dans les exemples.
PA C1 (comparatif) : polyamide 6 linéaire standard ayant un indice de viscosité IV de 256 (ISO 307 dans l'acide formique)
PA C2 (comparatif) : polyamide 6 linéaire standard ayant un IV de 115
PA 3 : polyamide 6 étoile obtenu par copolymérisation à partir de caprolactame en présence de 2,2,6,6-tetrakis-(β-carboxyéthyl)-cyclohexanone, selon la demande WO97/24388, ayant un IV de 106.
PA 4 : polyamide 6 étoile obtenu par copolymérisation à partir de caprolactame en présence de 2,2,6,6-tetrakis-(β-carboxyéthyl)-cyclohexanone, selon la demande WO97/24388, ayant un IV de 94.
PA C3 (comparatif) : polyamide 6.6 linéaire standard ayant un indice de viscosité IV de 134.
PA 5 : polyamide 6.6 haute fluidité ayant un indice de viscosité IV de 97.
PA 6 : polyamide 6 .6 haute fluidité ayant un indice de viscosité IV de 104.

Ces polyamides ont été caractérisés par des mesures de viscosité à l'état fondu réalisés sur un rhéomètre plan-plan Ares (Rheometrics), à 250°C pour les polyamides PA 6 et à 280°C pour les polyamides PA 6.6. Les courbes de viscosité en fonction du taux de cisaillement montrent que les polymères considérés ont un comportement Newtonien : la viscosité retenue est la valeur au plateau (entre 1 et 150 s-1).

**Tableau 1 (Polyamides PA 6)**

| | **Viscosité (Pa.s)** |
|---|---|
| PA C1 | 395 |
| PA C2 | 60 |
| PA 3 | 30 |
| PA 4 | 13 |

**Tableau 2 (Polyamides PA 6.6)**

| | **Viscosité (Pa.s)** |
|---|---|
| PA C3 | 220 |
| PA 5 | 30 |
| PA 6 | 32 |

Les renforts utilisés dans les exemples sont sous forme de préformes en tissus de verre, coupés aux dimensions requises pour la fabrication des plaques c'est-à-dire 150 x 150 mm. L'étoffe de renfort utilisée est un tissu en fibre de verre (0°-90°) d'origine Synteen & Luckenhaus issu d'un roving de 1200 tex, présentant un grammage de 600 g/m².

### Exemple-1 : Préparation des composites

Les différents polymères considérés ont été transformés à titre d'exemple sous forme de film. Les films sont réalisés par extrusion de granulés sur une extrudeuse Leistritz bivis de diamètre 34 et de UD 34 équipée d'une filière plate et d'une filmeuse. Le débit d'extrudeuse est de 10 Kg/h, la vitesse de rotation des vis est de 250 rpm avec un profil sans dégazage ; la température étant de 250°C pour le PA 6 et de 270°C pour le PA 6.6. L'écartement des lèvres de la filière est de 300µm environ pour une largeur de 30 cm. La vitesse d'appel est de 3,2 m/min sur des rouleaux régulés à 115°C. Les films obtenus ont une épaisseur qui varie entre 160 et 180 µm (bobines de largeur 300 mm).

Les films polymères sont découpés sous forme de feuilles de 150x150 mm, à partir des bobines précédemment obtenues.

La réalisation des pièces composites est faite au moyen d'une presse hydraulique à double plateaux contrôlés en température Schwabenthan (Polystat 300A) : plateaux chauffants (résistances chauffantes), et plateaux refroidis (circulation d'eau). Un moule métallique dotée d'une empreinte de dimensions 150 mm x 150 mm est utilisé.

Pour réaliser un composite contenant 80% poids de fibres de verre avec le tissus de grammage 600 g/m², on introduit dans le moule une préforme constituée d'un empilement alterné comprenant au total de 6 feuilles de tissus de verre et de 5 feuilles de polymère, les deux couches externes étant des feuilles de tissus de verre.

La température des plateaux de la presse est préalablement montée soit à 250°C pour les PA 6 soit à 290°C pour les PA 6.6 avant l'introduction de la préforme. A cette température, la pression est appliquée entre quelques bars (5 bars) jusqu'à 70 bars et maintenue à cette valeur ; des dégazages sont rapidement effectués. L'ensemble est maintenu à la même température et pression, sans dégazage. A nouveau, il est effectué ensuite une série de dégazages, puis un maintien toujours à même température et pression. Le moule est alors transféré sur le dispositif plateaux refroidis et maintenu sous la pression de 70 bars. Différents types de cycle ont été utilisés : haute et moyenne pression, temps court et long. Les pièces composites ainsi obtenues ont une dimension de 150x150 mm et une épaisseur de 2 mm environ.

### Exemple 2 : Caractérisation des composites base PA 6

Deux types de cycles ont été réalisés : cycle long de 20 min sous 70 bars (Cycle 1), cycle court sous 70 bars de 5 min (Cycle 2). Ces temps correspondent à la durée totale du cycle entre la mise en température du moule et le refroidissement sous pression.

Les plaques 150x150 mm sont découpées afin d'obtenir des échantillons de dimensions 150x20x2 mm. Un traitement de conditionnement est alors réalisé selon la norme ISO1110 "plastique/polyamide/conditionnement accéléré d'éprouvettes". La teneur en eau à l'équilibre est obtenue par conditionnement des pièces composites avec un cycle de 11 jours, à 70°C sous une humidité résiduelle RH de 62%.

Les propriétés mécaniques ont été obtenues à 23°C, et humidité RH = 50% (stabilisation des éprouvettes 48h à 23°C, RH = 50).

Les essais de flexion 3 points à température ambiante sont réalisés sur des éprouvettes parrallépipédiques (150x20x2 mm), selon la norme ISO N° 14125, sur une machine ZWICK 1478 : entre-axe de 64 mm, vitesse de traverse de 5 mm/min. Les valeurs de module élastique E de Young (GPa) et de contrainte σ max au pic (MPa) sont mesurées et calculées.

**Tableau 3 :**

| Résultats pour les pièces fabriquées selon Cycle long (1) et court (2) | | | | |
|---|---|---|---|---|
| | **CYCLE 1** | | **CYCLE 2** | |
| **Polyamide utilisé** | **Module élastique E** **(GPa)** | **Contrainte σ max** **(MPa)** | **Module élastique E** **(GPa)** | **Contrainte σ max** **(MPa)** |
| PA C1 | 26,5 | 506 | 21,5 | 234 |
| PA C2 | 27 | 507 | 23 | 245 |
| PA 3 | 27 | 540 | 26 | 545 |
| PA 4 | 28 | 611 | 27,5 | 601 |

Dans le cas d'un cycle de fabrication long (cycle 1), les performances mécaniques obtenues sont élevées : contrainte max (pic) de 506 à 611 MPa, pour des valeurs de module entre 26,5 et 28 GPa.

Pour des temps courts (cycle 2), il apparaît une importante différence de performances entre les différents polymères. Les polymères PA C1 et PA C2 voient leur propriétés fortement diminuées notamment la contrainte à rupture, qui est inférieure à 250 MPa. Par contre de façon surprenante, les polymères PA 3 et PA 4 maintiennent leurs performances quelque soit la durée de cycle utilisée.

### Exemple 3 : Caractérisation des composites base PA 6.6

Deux types de cycles ont été réalisés : cycle de 5 min sous pression moyenne de 15,5 bars (Cycle 3), cycle de 5 min sous pression faible de 4 bars (Cycle 4). Ces temps correspondent à la durée totale du cycle entre la mise en température du moule et le refroidissement sous pression.

Les plaques 150x150 mm sont découpées afin d'obtenir des échantillons de dimensions 150x20x2 mm. Un traitement de conditionnement est alors réalisé selon la norme ISO1110 "plastique/polyamide/conditionnement accéléré d'éprouvettes". La teneur en eau à l'équilibre est obtenue par conditionnement des pièces composites avec un cycle de 11 jours, à 70°C sous une humidité résiduelle RH de 62%.

Les propriétés mécaniques ont été obtenues à 23°C, et humidité RH = 50% (stabilisation des éprouvettes 48h à 23°C, RH = 50).

Les essais de flexion 3 points à température ambiante sont réalisés sur des -éprouvettes parrallépipédiques (150x20x2 mm), selon la norme ISO N° 14125, sur une machine ZWICK 1478 : entre-axe de 64 mm, vitesse de traverse de 5 mm/min. Les valeurs de module élastique E de Young (GPa) et de contrainte σ max au pic (MPa) sont mesurées et calculées.

**Tableau 4 :**

| Résultats pour les pièces fabriquées selon Cycle pression moyenne (3) et pression faible (4) | | | | |
|---|---|---|---|---|
| | **CYCLE 3** | | **CYCLE 4** | |
| **Polyamide utilisé** | **Module élastique E** **(GPa)** | **Contrainte σ max** **(MPa)** | **Module élastique E** **(GPa)** | **Contrainte σ max** **(MPa)** |
| PA C3 | 27 | 510 | 23,5 | 425 |
| PA 5 | 28,5 | 510 | 25 | 510 |
| PA 6 | 28,5 | 575 | 27,5 | 515 |

Dans le cas d'un cycle de fabrication 5 minutes sous pression moyenne (cycle 3), les performances mécaniques obtenues sont élevées : contrainte max (pic) de 510 à 575 MPa, pour des valeurs de module entre 27 et 28,5 GPa.

Pour des pressions plus faible (cycle 4), il apparaît une importante différence de performances entre les différents polymères. Les polymères PA C3 voit ses propriétés sensiblement diminuées notamment la contrainte à rupture, qui est inférieure à 450 MPa. Par contre de façon surprenante, les polymères PA 5 et PA 6 maintiennent leurs performances quelle que soit la pression de cycle utilisée.

## Revendications

1. Procédé de fabrication d'un article composite comprenant au moins :
a) une étape d'imprégnation d'une étoffe de renfort avec une composition polyamide à l'état fondu, présentant une viscosité fondue η comprise entre 1 et 50 Pa.s, le polyamide présentant une masse moléculaire Mn supérieure à 8000 ; ladite étoffe de renfort étant maintenue à une température de plus ou moins 50°C par rapport à la température de fusion dudit polyamide ;
l'imprégnation de l'étoffe par la composition polyamide est réalisée soit :
- par injection de la composition polyamide à l'état fondu sur l'étoffe ; on
- par mise en présence de l'étoffe avec la composition polyamide sous forme de poudre ou de film, puis mise en fusion de ladite composition polyamide ; et
b) une étape de refroidissement et ensuite de récupération de l'article composite.
la viscosité en fondue est mesurée à l'aide d'un rhéomètre plan-plan de diamètre 50 mm, sous un balayage en cisaillement par pallier allant de 1 à 160 s-1, par fusion d'un film de polyamide d'une épaisseur 150 µm à une température de 25 à 30°C au dessus de son point de fusion.

2. Procédé selon la revendication 1, **caractérisé en ce que** le polyamide est un polyamide étoile comprenant des chaînes macromoléculaires étoiles et le cas échéant des chaînes macromoléculaires linéaires.

3. Procédé selon la revendication 2, **caractérisé en ce que** le polyamide étoile est obtenu par mélange en polymérisation, en présence des monomères de polyamide, d'au moins un composé multifonctionnel comprenant au moins 3 fonctions réactives identiques de type fonction amine ou fonction acide carboxylique.

4. Procédé selon l'une quelconque des revendications 2 ou 3, **caractérisé en ce que** le polyamide à structure étoile, comprenant des chaînes macromoléculaires étoiles, est obtenu par copolymérisation d'un mélange de monomères comprenant au moins :
a) des monomères de formule générale (I) suivante : 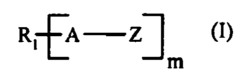
b) des monomères de formules générales (IIa) et (IIb) suivantes :
X-R₂-Y (IIa)
ou 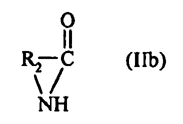
c) éventuellement des monomères de formule générale (III) suivante :
Z-R₃-Z (III)
dans lesquelles :
- R1 est un radical hydrocarboné comprenant au moins 2 atomes de carbone, linéaire ou cyclique, aromatique ou aliphatique et pouvant comprendre des hétéroatomes,
- A est une liaison covalente ou un radical hydrocarboné aliphatique pouvant comprendre des hétéroatomes et comprenant de 1 à 20 atomes de carbone,
- Z représente une fonction amine primaire ou une fonction acide carboxylique,
- Y est une fonction amine primaire quand X représente une fonction acide carboxylique, ou Y est une fonction acide carboxylique quand X représente une fonction amine primaire,
- R2, R3 identiques ou différents représentent des radicaux hydrocarbonés aliphatiques, cycloaliphatiques ou aromatiques substitués ou non comprenant de 2 à 20 atomes de carbone et pouvant comprendre des hétéroatomes,
- m représente un nombre entier compris entre 3 et 8.

5. Procédé selon la revendication 1, **caractérisé en ce que** le polyamide est choisi dans le groupe comprenant les polyamides obtenus par polycondensation d'au moins un diacide carboxylique aliphatique linéaire avec une diamine aliphatique ou cyclique ou entre au moins un diacide carboxylique aromatique et une diamine aliphatique ou aromatique, les polyamides obtenus par polycondensation d'au moins un aminoacide ou lactame sur lui-même, ou leur mélange et (co)polyamides.

6. Procédé selon la revendication 5, **caractérisé en ce que** le polyamide est obtenu par addition, avant ou pendant la polymérisation des monomères de polyamide, de monomères de types diamines, diacides carboxyliques, monoamines et/ou monoacides carboxyliques.

7. Procédé selon la revendication 5, **caractérisé en ce que** le polyamide est obtenu par mélange, notamment en fondu, d'un polyamide avec des monomères modifiant la longueur des chaînés, tel que notamment des diamines, diacides carboxyliques, monoamines et/ou monoacides carboxyliques.

8. Procédé selon l'une quelconque des revendications 1 à 7, **caractérisé en ce que** les étoffes de renfort sont des réseaux fibreux ou filamenteux dont les fils et fibres sont choisis parmi les fils et/ou les fibres de carbone, de verre, d'aramides, de polyimides, de lin, de chanvre, de sisal, de coir, de jute, de kenaf et/ou de leur mélange.

9. Procédé selon l'une quelconque des revendications 1 à 8, **caractérisé en ce que** l'on injecte la composition polyamide dans une chambre de moulage comprenant au moins une étoffe de renfort pour réaliser l'imprégnation.

10. Procédé selon l'une quelconque des revendications 1 à 8, **caractérisé en ce que** l'on met en contact une ou plusieurs étoffes de renfort et un ou plusieurs films de polyamide tel que défini précédemment et l'on réalise ladite imprégnation par fusion du polyamide.

11. Procédé selon l'une quelconque des revendications 1 à 8, **caractérisé en ce que** l'on met en contact une ou plusieurs étoffes de renfort et de la poudre d'un polyamide tel que défini précédemment et l'on réalise ladite imprégnation par fusion du polyamide.

12. Procédé selon l'une quelconque des revendications 1 à 11, **caractérisé en ce que** l'article composite comprend de 25 à 66 % en volume d'étoffe de renfort par rapport au poids total de l'article.

13. Article composite ou préforme susceptible d'être obtenu par le procédé selon l'une quelconque des revendications 1 à 12.

## Claims

1. Process for the manufacture of a composite article comprising at least:
a) a stage of impregnation of a reinforcing cloth with a polyamide composition in the molten state exhibiting a melt viscosity η of between 1 and 50 Pa·s, the polyamide exhibiting a molecular weight Mn of greater than 8000; said reinforcing cloth being maintained at a temperature of plus or minus 50°C with respect to the melting point of said polyamide;
the impregnation of the cloth by the polyamide composition is carried out either:
- by injection of the polyamide composition in the molten state onto the cloth; or
- by bringing the cloth together with the polyamide composition in the powder or film form and then melting said polyamide composition; and
b) a stage of cooling and subsequently recovering the composite article;
the melt viscosity is measured using a plate/plate rheometer with a diameter of 50 mm, under a stepwise shear sweep ranging from 1 to 160 s⁻¹, by melting a film of polyamide with a thickness of 150 µm at a temperature from 25 to 30°C above its melting point.

2. Process according to Claim 1, **characterized in that** the polyamide is a star polyamide comprising star macromolecular chains and, if appropriate, linear macromolecular chains.

3. Process according to Claim 2, **characterized in that** the star polyamide is obtained by mixing in polymerization, in the presence of the polyamide monomers, at least one polyfunctional compound comprising at least three identical reactive functional groups of amine functional group or carboxylic acid functional group type.

4. Process according to either one of Claims 2 and 3, **characterized in that** the polyamide possessing a star structure, comprising star macromolecular chains, is obtained by copolymerization of a mixture of monomers comprising at least:
a) monomers of following general formula (I): 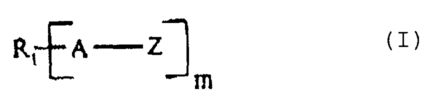
b) monomers of following general formulae (IIa) and (IIb) :
X-R₂-Y (IIa)
or 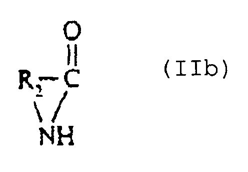
c) optionally monomers of following general formula (III):
Z-R₃-Z (III)
in which:
- R₁ is a linear or cyclic and aromatic or aliphatic, hydrocarbon radical comprising at least 2 carbon atoms which can comprise heteroatoms,
- A is a covalent bond or an aliphatic hydrocarbon radical which can comprise heteroatoms and which comprises from 1 to 20 carbon atoms,
- Z represents a primary amine functional group or a carboxylic acid functional group,
- Y is a primary amine functional group when X represents a carboxylic acid functional group or Y is a carboxylic acid functional group when X represents a primary amine functional group,
- R₂ and R₃, which are identical or different, represent substituted or unsubstituted and aliphatic, cycloaliphatic or aromatic hydrocarbon radicals comprising from 2 to 20 carbon atoms which can comprise heteroatoms,
- m represents an integer between 3 and 8.

5. Process according to Claim 1, **characterized in that** the polyamide is chosen from the group consisting of polyamides obtained by polycondensation of at least one linear aliphatic dicarboxylic acid with an aliphatic or cyclic diamine or between at least one aromatic dicarboxylic acid and an aliphatic or aromatic diamine, polyamides obtained by polycondensation of at least one amino acid or lactam with itself, or their blend and (co)polyamides.

6. Process according to Claim 5, **characterized in that** the polyamide is obtained by addition, before or during the polymerization of the polyamide monomers, of monomers of diamine, dicarboxylic acid, monoamine and/or monocarboxylic acid types.

7. Process according to Claim 5, **characterized in that** the polyamide is obtained by blending, in particular melt blending, a polyamide with monomers which modify the length of the chains, such as, in particular, diamines, dicarboxylic acids, monoamines and/or monocarboxylic acids.

8. Process according to any one of Claims 1 to 7, **characterized in that** the reinforcing cloths are fibrous or filamentary networks, the yarns and fibers of which are chosen from yarns and/or fibers formed of carbon, glass, aramids, polyimides, flax, hemp, sisal, coir, jute, kenaf and/or their mixture.

9. Process according to any one of Claims 1 to 8, **characterized in that** the polyamide composition is injected into a molding chamber comprising at least one reinforcing cloth in order to carry out the impregnation.

10. Process according to any one of Claims 1 to 8, **characterized in that** one or more reinforcing cloths and one or more films of polyamide as defined above are brought into contact and said impregnation is carried out by melting the polyamide.

11. Process according to any one of Claims 1 to 8, **characterized in that** one or more reinforcing cloths and powder of a polyamide as defined above are brought into contact and said impregnation is carried out by melting the polyamide.

12. Process according to any one of Claims 1 to 11, **characterized in that** the composite article comprises from 25 to 66% by volume of reinforcing cloth, with respect to the total weight of the article.

13. Composite article or preform capable of being obtained by the process according to any one of Claims 1 to 12.

## Patentansprüche

1. Verfahren zur Herstellung eines Verbundgegenstands mit mindestens:
a) einem Schritt der Imprägnierung eines zur Verstärkung dienenden textilen Flächengebildes mit einer Polyamidzusammensetzung in schmelzflüssigem Zustand mit einer Schmelzeviskosität η zwischen 1 und 50 Pa.s, wobei das Polyamid eine Molmasse Mn von mehr als 8000 aufweist; wobei das zur Verstärkung dienende textile Flächengebilde bei einer Temperatur von plus oder minus 50°C in bezug auf die Schmelztemperatur des Polyamids gehalten wird;
wobei die Imprägnierung des textilen Flächengebildes mit der Polyamidzusammensetzung entweder
- durch Einspritzen der Polyamidzusammensetzung in schmelzflüssigem Zustand auf das textile Flächengebilde oder
- durch Zusammenbringen des textilen Flächengebildes mit der Polyamidzusammensetzung in Pulver- oder Folienform und nachfolgendes Schmelzen der Polyamidzusammensetzung durchgeführt wird; und
b) einem Schritt des Abkühlens und nachfolgenden Gewinnens des Verbundgegenstands;
wobei die Schmelzeviskosität mit Hilfe eines Platte-Platte-Rheometers mit einem Durchmesser von 50 mm mit einer stufenweisen Scherungsabtastung von 1 bis 160 s⁻¹ durch Schmelzen einer Polyamidfolie mit einer Dicke von 150 µm bei einer Temperatur von 25 bis 30°C über dem Schmelzpunkt des Polyamids gemessen wird.

2. Verfahren nach Anspruch 1, **dadurch gekennzeichnet, daß** es sich bei dem Polyamid um ein sternförmiges Polyamid mit sternförmigen makromolekularen Ketten und gegebenenfalls linearen makromolekularen Ketten handelt.

3. Verfahren nach Anspruch 2, **dadurch gekennzeichnet, daß** das sternförmige Polyamid durch Mischen von mindestens einer multifunktionellen Verbindung mit mindestens 3 gleichen reaktiven Funktionen vom Typ Aminfunktion oder Carbonsäurefunktion in Gegenwart von Polyamid-Monomeren bei der Polymerisation erhalten wird.

4. Verfahren nach Anspruch 2 oder 3, **dadurch gekennzeichnet, daß** das Sternstruktur aufweisende Polyamid mit sternförmigen makromolekularen Ketten durch Copolymerisation einer Monomerenmischung, enthaltend mindestens:
a) Monomere der folgenden allgemeinen Formel (I): 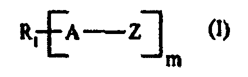
b) Monomere der folgenden allgemeinen Formeln (IIa) und (IIb):
X-R₂-Y (IIa)
oder 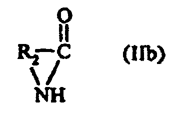
c) gegebenenfalls Monomere der folgenden allgemeinen Formel (III):
Z-R₃-Z (III)
worin:
- R₁ für einen linearen oder cyclischen, aromatischen oder aliphatischen Kohlenwasserstoffrest, der mindestens 2 Kohlenstoffatome aufweist und Heteroatome enthalten kann, steht,
- A für eine kovalente Bindung oder einen aliphatischen Kohlenwasserstoffrest, der Heteroatome enthalten kann und 1 bis 20 Kohlenstoffatome aufweist, steht;
- Z für eine primäre Aminfunktion oder eine Carbonsäurefunktion steht,
- Y für eine primäre Aminfunktion steht, wenn X für eine Carbonsäurefunktion steht, oder Y für eine Carbonsäurefunktion steht, wenn X für eine primäre Aminfunktion steht,
- R₂ und R₃ gleich oder verschieden sind und für gegebenenfalls substituierte aliphatische, cycloaliphatische oder aromatische Kohlenwasserstoffreste, die 2 bis 20 Kohlenstoffatome aufweisen und Heteroatoame enthalten können, stehen,
- m für eine ganze Zahl zwischen 3 und 8 steht, erhalten wird.

5. Verfahren nach Anspruch 1, **dadurch gekennzeichnet, daß** das Polyamid aus der Gruppe bestehend aus durch Polykondensation von mindestens einer linearen alipahtischen Dicarbonsäure mit einem aliphatischen oder cyclischen Diamin oder zwischen mindestens einer aromatischen Dicarbonsäure und einem aliphatischen oder aromatischen Diamin erhaltenen Polyamiden, durch Polykondensation von mindestens einer Aminosäure oder mindestens einem Lactam mit sich selbst oder Mischungen und (Co)polyamiden davon ausgewählt wird.

6. Verfahren nach Anspruch 5, **dadurch gekennzeichnet, daß** das Polyamid durch Zugabe von Monomeren vom Diamin-, Dicarbonsäure-, Monoamin- und/oder Monocarbonsäure-Typ vor oder während der Polymerisation von Polyamid-Monomeren erhalten wird.

7. Verfahren nach Anspruch 5, **dadurch gekennzeichnet, daß** das Polyamid durch Mischen, insbesondere in der Schmelze, eines Polyamids mit Monomeren, die die Kettenlänge modifizieren, wie insbesondere Diaminen, Dicarbonsäuren, Monoaminen und/oder Monocarbonsäuren, erhalten wird.

8. Verfahren nach einem der Ansprüche 1 bis 7, **dadurch gekennzeichnet, daß** es sich bei den zur Verstärkung dienenden textilen Flächengebilden um Faser- oder Filamentnetzwerke handelt, deren Fäden und Fasern unter Fäden und/oder Fasern aus Kohlenstoff, Glas, Aramiden, Polyimiden, Leinen, Hanf, Sisal, Kokosbastabfall, Jute, Kenaf und/oder Mischungen davon ausgewählt sind.

9. Verfahren nach einem der Ansprüche 1 bis 8, **dadurch gekennzeichnet, daß** man zur Durchführung der Imprägnierung die Polyamidzusammensetzung in eine Formgebungskammer mit dem zur Verstärkung dienenden textilen Flächengebilde einspritzt.

10. Verfahren nach einem der Ansprüche 1 bis 8, **dadurch gekennzeichnet, daß** man ein oder mehrere zur Verstärkung dienende textile Flächengebilde und eine oder mehrere Polyamidfolien gemäß obiger Definition miteinander in Berührung bringt und die Imprägnierung durch Schmelzen des Polyamids durchführt.

11. Verfahren nach einem der Ansprüche 1 bis 8, **dadurch gekennzeichnet, daß** man ein oder mehrere zur Verstärkung dienende textile Flächengebilde und Polyamidpulver gemäß obiger Definition miteinander in Berührung bringt und die Imprägnierung durch Schmelzen des Polyamids durchführt.

12. Verfahren nach einem der Ansprüche 1 bis 11, **dadurch gekennzeichnet, daß** der Verbundgegenstand 25 bis 66 Vol.-% zur Verstärkung dienendes textiles Flächengebilde, bezogen auf das Gesamtgewicht des Gegenstands, enthält.

13. Verbundgegenstand oder Vorformling, der durch das Verfahren nach einem der Ansprüche 1 bis 12 erhältlich ist.
